# EUROPÄISCHE PATENTANMELDUNG

(11) **EP 0 931 641 A2**
(43) Veröffentlichungstag der Anmeldung: **28.07.1999**
(21) Anmeldenummer: 99100176.9
(22) Anmeldetag: 07.01.1999
(51) Int. Cl.: B29C 70/84

(54) **Verfahren zum Herstellen einer Verbindung eines Bauteils mit einem Bauelement**

(30) Priorität: 22.01.1998 DE 19802203
(71) Anmelder: HENNIGES ELASTOMER- UND KUNSTSTOFFTECHNIK GMBH & CO KG, D-31547 Rehburg-Loccum (DE)
(72) Erfinder: Kreye, Bernard, 31515 Wunstorf (DE)
(74) Vertreter: Jabbusch, Wolfgang, Dr.Jur. Jabbusch, Wehser & Lauerwald Patentanwälte

(57) **Zusammenfassung**

Bei einem Verfahren zum Herstellen einer Verbindung eines Bauteils mit einem Bauelement ist vorgesehen, daß das Bauteil an eine im Verbindungsbereich befindliche Fläche des Bauelements angelegt wird und daß mittels zwischen Bauteil und Bauelement eingebrachter, am Bauelement anhaftender und aushärtender Vergußmasse wenigstens ein Zwischenhalter ausgebildet wird, der mit dem Bauteil in haltende Wirkverbindung bringbar ist.

Mit diesem Verfahren ist eine Verbindung kostengünstiger herzustellen, die mit geringem Arbeitsaufwand wieder lösbar ist.

## Beschreibung

Die Erfindung betrifft ein Verfahren zum Herstellen einer Verbindung eines Bauteils mit einem Bauelement.

Übliche verfahren zur Verbindung von Teilen umfassen zum einen die Gruppe der lösbaren Verbindungen und zum anderen die Gruppe der unlösbaren Verbindungen. Dabei ist eigentlich auch eine unlösbare Verbindung von Teilen zwar grundsätzlich wenn auch mit erheblichen Aufwand lösbar, das führt jedoch, zum Beispiel bei einer Schweißverbindung oder Nietverbindung, zur völligen Zerstörung der Verbindungselemente und zumeist auch zu einer mechanischen Beschädigung der Verbindungsbereiche der verbunden gewesenen Teile.

Lösbare Verbindungen, zumeist Schraubverbindungen, Klemmverbindungen oder dergleichen, sind dagegen sowohl in der Herstellung und Montage als auch insbesondere bei der Demontage, wenn es gilt, die Verbindungsmittel zu lösen, arbeitsaufwendig und damit kostenintensiv.

Der Erfindung liegt die Aufgabe zugrunde, eine Verbindung kostengünstig herzustellen, die mit geringem Arbeitsaufwand wieder lösbar ist.

Diese Aufgabe ist erfindungsgemäß dadurch gelöst, daß das Bauteil an eine im Verbindungsbereich befindliche Fläche des Bauelements angelegt wird und daß mittels zwischen Bauteil und Bauelement eingebrachter, am Bauelement anhaftender und aushärtender Vergußmasse wenigstens ein Zwischenhalter ausgebildet wird, der mit dem Bauteil in haltende Wirkverbindung bringbar ist.

Es ist eine Besonderheit des hier angegebenen Verfahrens, daß das Bauteil mit dem Bauelement nicht direkt verbunden wird, sondern vielmehr indirekt über den Zwischenhalter, wobei der Zwischenhalter in erfindungswesentlicher Weise an Ort und Stelle, das heißt im Verbindungsbereich, durch Einbringen der aushärtenden Vergußmasse zwischen Bauelement und Bauteil ausgebildet wird.

Dabei wird so vorgegangen, daß das Bauteil an das Bauelement in der vorbestimmten Position gesetzt wird und daß es dann anschließend, bei der Ausbildung des Zwischenhalters durch Einbringen der Vergußmasse, an einer Formgebung der Vergußmasse zum Zwischenhalter beteiligt wird.

Der aus Vergußmasse an Ort und Stelle, nämlich im Verbindungsbereich ausgebildete Zwischenhalter, ist mit dem Bauelement aufgrund seiner Anhaftung an diesem verbunden. Zur Verstärkung dieser Verbindung wird der Zwischenhalter vorzugsweise mit dem Bauelement verklebt, indem die noch mehr oder weniger flüssige Vergußmasse in einen Kleber-Auftrag im Verbindungsbereich gesetzt wird, der dort zuvor aufgetragen wurde. Mit dem Bauteil kann der ausgehärtete Zwischenhalter dann in eine haltende, z. B. gleichfalls haftende, Wirkverbindung gebracht werden, so daß letztlich das Bauteil mit dem Bauelement leicht und einfach verbindbar ist. Auch auf die im Verbindungsbereich befindlichen Flächen des Bauteils kann ein Kleber aufgetragen werden. Eine dauerhaft haltende Wirkverbindung zwischen dem aushärtenden Zwischenhalter und dem Bauteil wird dann durch eine aufgrund des Kleberauftrages hergestellte kraftschlüssige Verbindung zwischen Zwischenhalter und Bauteil hergestellt.

Der Zwischenhalter kann beispielsweise aus einer Vergußmasse gegossen werden.

Nach einer nächsten Weiterbildung der Erfindung wird durch das Bauteil und das Bauelement ein Aufnahmeraum für die Vergußmasse während des Ausbildens des Zwischenhalters ausgebildet. Vorzugsweise wird dieser Aufnahmeraum durch das Bauteil und das Bauelement vollständig ausgebildet. Das Bauteil ist beispielsweise an das Bauelement in der vorbestimmten Position ansetzbar, wodurch zugleich ein derartiger Aufnahmeraum ausgebildet wird. Der Aufnahmeraum ist vorzugsweise im wesentlichen als Rille, als Vertiefung oder dergleichen Hohlkammer z. B. im Bauteil ausgebildet, in welche die extrudierte Vergußmasse zum Ausbilden des Zwischenhalters eingebracht wird. Die als Aufnahmeraum vorgesehene Hohlkammer ist in dem Bauteil vorzugsweise so angeordnet, daß sie bei Anlage des Bauteils an das Bauelement in Richtung der im Verbindungsbereich befindlichen Fläche des Bauelements offensteht. Die in die Hohlkammer eingefüllte Vergußmasse füllt die Hohlkammer vollständig aus, wobei die Luft aus der Hohlkammer entweicht. Die Hohlkammer wird durch die eingefüllte Vergußmasse so weit ausgefüllt, daß sich die Vergußmasse auch an die im Verbindungsbereich befindliche Fläche des Bauelements anlegt, in deren Richtung die Hohlkammer offen ausgebildet ist. Durch die Anlage der Vergußmasse an diese Fläche tritt eine Anhaftung der Vergußmasse an der im Verbindungsbereich befindlichen Fläche des Bauelements ein, wodurch die Verbindung des aus der Vergußmasse aushärtenden Zwischenhalters mit dem Bauelement hergestellt ist. Zugleich geht der aus der Vergußmasse ausgebildete Zwischenhalter eine beispielsweise kraftschlüssige Verbindung mit dem Bauteil ein, in dessen Hohlkammer die Vergußmasse eingebracht wurde. Die Wandungen der Hohlkammer sowie die im Verbindungsbereich befindliche Fläche des Bauelements dienen dabei als Form für den aus der eingebrachten Vergußmasse herzustellenden Zwischenhalter.

Nach einer Weiterbildung der Erfindung ist vorgesehen, daß zum Einfüllen der Vergußmasse in die Hohlkammer eine Einfülleinrichtung mit einer Einfülldüse verwendet wird, wobei die Vergußmasse durch die Einfülldüse über wenigstens eine Öffnung des Bauteils in die Hohlkammer eingebracht wird. Bei der Verwendung einer derartigen Einfülleinrichtung mit einer beispielsweise spitzzulaufenden Einfülldüse wird das Einbringen der Vergußmasse in die Hohlkammer des Bauteils wesentlich vereinfacht. Durch die Beaufschlagung der Einfülldüse mit der Vergußmasse unter einem Druck wird die Vergußmasse durch die Einfülldüse hindurchgeführt, beispielsweise hindurchgespritzt, wodurch sie über die Öffnung des Bauteils direkt in die Hohlkammer eintreten kann. Dieser Einbringprozeß wird so lange durchgeführt, bis die gesamte Hohlkammer mit der Vergußmasse ausgefüllt ist, insbesondere bis die Vergußmasse auch an der im Verbindungsbereich befindlichen Fläche des Bauelements anliegt und an dieser haften kann. Die zuvor in der Hohlkammer vorhandene Luft entweicht aus der Hohlkammer beispielsweise über eine zweite Öffnung, die somit als Entlüftungsöffnung dient. Das Einbringen der Vergußmasse über die Einfülldüse wird so lange durchgeführt, bis sämtliche Luft aus der Hohlkammer entwichen ist und eingebrachte Vergußmasse aus der Entlüftungsöffnung auszutreten beginnt. Zum Einfüllen der Vergußmasse mit der Einfülldüse kann eine später wieder verschließbare Öffnung, z. B. eine Durchbruchsbohrung, in das Bauteil eingebracht werden. Beispielsweise kann es sich bei dem Bauteil um ein langgestrecktes Profil handeln, das in einem frei wählbaren Bereich eine derartige Einfüllöffnung und gegebenenfalls auch eine Entlüftungsöffnung aufweist. Möglich ist jedoch auch, die Vergußmasse mittels einer Einfülldüse über ein freies Ende eines Profils als Bauteil in die Hohlkammer einzubringen, nämlich dann, wenn die Hohlkammer an diesem freien Ende auch ohne Einbringen einer Öffnung in das Bauteil zugänglich ist.

Nach einer nächsten Weiterbildung der Erfindung wird das Bauteil während des Apsetzens an das Bauelement durch eine Halteeinrichtung gehalten und wird die Halteeinrichtung mit wenigstens einer mit einer Öffnung des Bauteils für die Einfülldüse korrespondierenden Öffnung für ein Durchführen der Einfülldüse versehen. Bei dem erfindungsgemäßen Verfahren wird das Bauteil an das Bauelement angesetzt, bevor eine Verbindung zwischen diesen Teilen hergestellt ist. Zur Fixierung des Bauteils dient vorzugsweise eine derartige Halteeinrichtung, die die Lage von Bauteil und Bauelement zueinander so lange fixiert, bis die zwischen Bauteil und Bauelement eingebrachte Vergußmasse zu einem diese Teile miteinander verbindenden Zwischenhalter aushärtet. Damit die Halteeinrichtung nicht dem Einbringen der Vergußmasse vorzugsweise in die Hohlkammer des Bauteils im Wege ist, ist die mit der Öffnung des Bauteils für die Einfülldüse korrespondierende Öffnung für das Durchführen der Einfülldüse vorgesehen. Zum Einfüllen der Vergußmasse in die Hohlkammer des Bauteils wird somit von außen die Einfülldüse der Einfülleinrichtung durch Öffnungen der Kalteeinrichtung und des Bauteils bis zur Hohlkammer des Bauteils hindurchgeführt.

Bauteil und Bauelement können aus unterschiedlichsten Materialien, wie zum Beispiel Metall, Glas, Holz, Kunststoff oder Elastomer bestehen. Das erfindungsgemäße Verfahren hat somit auch den Vorteil, unterschiedlichste Werkstoffe miteinander problemlos verbinden zu können.

Als Vergußmasse ist zum Beispiel ein Zweikomponenten-Polyurethan verwendbar, so daß der daraus geformte Zwischenhalter chemisch aushärtet. Als Vergußmasse ist auch ein Einkomponenten-Polyurethan verwendbar. Es sind jedoch auch andere aushärtende Materialien einsetzbar, zum Beispiel auch solche, die durch thermische Behandlung aushärten.

Eine haltende Wirkverbindung zwischen dem Bauteil und dem aus der Vergußmasse gebildeten Zwischenhalter ist nach einer Weiterbildung der Erfindung dadurch erreicht, daß zwischen dem Bauteil und dem ausgehärteten Zwischenhalter Formschluß bewirkende korrespondierende Gestaltungen verwendet werden, die eine Verklammerung, Verrastung oder Verklippung ermöglichen. So wird z. B. die Hohlkammer im Bauteil beim Einbringen der Vergußmasse derart gefüllt, daß sich der Zwischenhalter nach seinem Aushärten mit dem Bauteil verklammert hat. Ebenso lassen sich am Bauteil befindliche Vorsprünge, Leisten, Nasen, Rippen und dergleichen mit Vergußmasse umfüllen, so daß derartige Halteorgane im ausgehärteten Zwischenhalter aufgenommen und somit ebenfalls verklammert sind. Auf diese Weise werden zwischen ausgehärtetem Zwischenhalter und Bauteil formschlüssige Verbindungen zwischen diesen Teilen hergestellt. Da der fertige, seine Funktion entfaltende Zwischenhalter an dem Bauelement haftet bzw. mit dem Bauelement verklebt ist, sind schließlich Bauteil und Bauelement über den Zwischenhalter miteinander verbunden. Zwischen Bauteil und Zwischenhalter besteht dabei eine mechanische Verbindung, die sich ggf., bei entsprechender Geometrie der Halteorgane, auch relativ leicht wieder lösen läßt, nämlich dann, wenn sich das Bauteil von dem Zwischenhalter leicht abziehen läßt oder Vorsprünge, Füße, Rippen und dergleichen Halteorgane des Bauteils aus dem Zwischenhalter gezogen werden.

Die an der Aufnahme der Vergußmasse zum Zwischenhalter beteiligten Flächen des Bauteils können bei auftretender Adhäsionsneigung der für Bauteil und Vergußmasse verwendeten Werkstoffe vor Anlage der Vergußmasse mit einem Trennmittel beschichtet werden. Dadurch wird ein späteres Lösen der Verbindung erleichtert, das heißt Bauteil und Bauelement sind wieder voneinander ohne besonderen Aufwand trennbar.

Für eine haltende Wirkverbindung zwischen dem Bauteil und dem Zwischenhalter sind grundsätzlich diverse einen Formschluß bewirkende, korrespondierende Gestaltungen verwendbar.

Für die Vergußmasse ist ein nach der Aushärtung hinsichtlich ihrer Härte und Elastizität zu den entsprechenden Eigenschaften des jeweiligen Bauteils konträrer Werkstoff besonders vorteilhaft. Besteht das Bauteil ganz oder abschnittsweise zum Beispiel aus einem harten Material, wie Metall oder dergleichen, ist es vorteilhaft, für die Vergußmasse ein auch nach der Aushärtung noch elastisch bleibendes Material zu wählen. Das Bauteil kann dann von dem aus der Vergußmasse ausgehärteten Zwischenhalter abgezogen werden, da sich das elastische Material des Zwischenhalters verformen kann. Andererseits ist es dann vorteilhaft, eine härtere Vergußmasse einzusetzen, wenn das Bauteil aus einem weichen Material, zum Beispiel einem Elastomer besteht. Bei einer Trennung zwischen Bauteil und Bauelement verformt sich dann das gegenüber dem Zwischenhalter weichere Bauteil.

Ausführungsbeispiele des erfindungsgemäßen Verfahrens, insbesondere verschiedene Anwendungsmöglichkeiten der erfindungsgemäßen Verbindungstechnik, sind in der Zeichnung dargestellt. Es zeigen:
- Fig. 1: eine schematische Seitenansicht einer Ausführungsmöglichkeit eines Verbindungsbereichs zwischen einem Bauteil und einem Bauelement im Schnitt, Fig. 2 eine schematische Schnittansicht des Verbindungsbereichs entlang der Linie II-II in Fig. 1,
- Fig. 3: eine Ansicht des Verbindungsbereiches gemäß Fig. 1,
- Fig. 4: eine schematische Seitenansicht einer anderen Ausführungsmöglichkeit eines Verbindungsbereichs zwischen einem Bauteil und einem Bauelement im Schnitt,
- Fig. 5: eine Draufsicht des Verbindungsbereichs gemäß Fig. 4,
- Fig. 6: eine schematische Schnittansicht des Verbindungsbereichs entlang der Linie VI-VI in Fig. 5,
- Fig. 7: eine Ansicht des Verbindungsbereichs gemäß Fig. 4,
- Fig. 8: einen Abschnitt einer Kraftfahrzeugtür mit an der Kraftfahrzeugtür angebrachten, umlaufenden Türdichtungen im Schnitt,
- Fig. 9: eine schematische Schnittansicht einer Türdichtung gemäß Fig. 8,
- Fig. 10 und 11: weitere Schnittansichten der Türdichtung gemäß Fig. 8 und
- Fig. 12: eine weitere Seitenansicht der Türdichtung gemäß Fig. 8 bis 11.

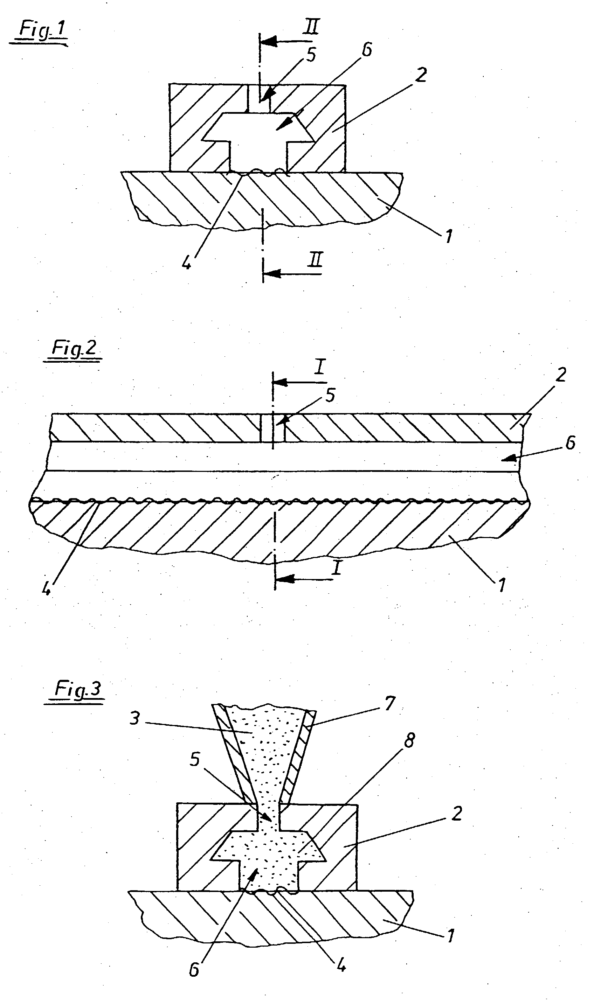

In Fig. 1 ist eine schematische Seitenansicht eines Verbindungsbereichs eines Bauteils 2 mit einem Bauelement 1 im Schnitt dargestellt. Auf die im Verbindungsbereich befindliche Fläche des Bauelements 1 ist Kleber 4 aufgetragen.
Bei dem Bauelement 1 handelt es sich beispielsweise um einen Abschnitt einer Fahrzeugkarosserie und bei dem Bauteil 2 handelt es sich z. B. um ein an der Fahrzeugkarosserie zu befestigendes Profil, insbesondere Dichtungsprofil. Das Bauteil 2 ist im Querschnitt rechteckig ausgebildet. Das Bauteil 2 weist eine Materialausnehmung mit pilzförmigem Querschnitt auf, durch die eine Hohlkammer 6 ausgebildet wird. Die Hohlkammer 6 erstreckt sich über die gesamte Länge des Bauteils 2, wie aus Fig. 2 ersichtlich ist. Die Hohlkammer 6 ist innerhalb des Bauteils 2 so angeordnet, daß sie mit dem Pilzstamm in Richtung der im Verbindungsbereich befindlichen Fläche des Bauelements 1 offensteht.

Durch die Hohlkammer 6 wird ein Aufnahmeraum ausgebildet, in welchen eine Vergußmasse 3 zwischen das Bauteil 2 und das Bauelement 1 eingebracht werden kann. In Fig. 3 ist das Einbringen einer Vergußmasse 3 mittels einer Einfülldüse 7 dargestellt. Die in dem Bauteil 2 angeordnete Hohlkammer 6 ist über eine Öffnung 5, eine Bohrung, mit der Umgebung des Bauteils 2 verbunden. Die in Fig. 3 dargestellte Einfülldüse 7 einer Einfülleinrichtung ist mit ihrem zugespitzen Ende von außen an die Öffnung 5 angesetzt. Durch die Einfülldüse 7 wird eine Vergußmasse 3 durch die Öffnung 5 hindurch in die Hohlkammer 6 eingefüllt. Das EInfüllen der Vergußmasse 3 erfolgt so lange, bis aus der Hohlkammer 6 sämtliche Luft entwichen ist und die Hohlkammer 6 vollständig mit der Vergußmasse 3 ausgefüllt ist. Dabei legt sich die Vergußmasse 3 auch an die im Verbindungsbereich befindliche Fläche des Bauelements 1 an, die zuvor mit dem Kleber 4 beauftragt wurde. Die Vergußmasse 3 härtet nach ihrem Einbringen in die Hohlkammer 6 zu einem Zwischenhalter 8 aus. Dieser ausgehärtete Zwischenhalter 8 weist die Pilzform des Hohlkammerquerschnitts auf. Durch das Setzen der Vergußmasse 3 in den Kleber 4, der auf das Bauelement 1 aufgetragen wurde, ist der ausgehärtete Zwischenhalter 8 mit dem Bauelement 1 kraftschlüssig verbunden. Bei einer Wahl von geeigneten Materialien kann eine Anhaftung des Zwischenhalters 8 an dem Bauelement 1 auch ohne Verwenden eines Klebers 4 erreicht werden, nämlich dann, wenn das Material der Vergußmasse 3 an dem Bauelement 1 anhaftet.

Mit den vom Zwischenhalter 8 ausgebildeten seitlichen Vorsprüngen der Pilzform werden Hinterschneidungen als korrespondierende Gestaltungen des Bauteils 2 hintergriffen. Zwischen dem Zwischenhalter 8 und dem Bauteil 2 wird somit eine formschlüssige Verbindung ausgebildet, die bei Bedarf ohne eine Zerstörung der an der Verbindung beteiligten Teile wieder lösbar ist. Bei dem erfindungsgemäßen Verfahren werden durch den vor Ort ausgebildeten Zwischenhalter 8 somit das Bauteil 2 und das Bauelement 1 indirekt miteinander verbunden.

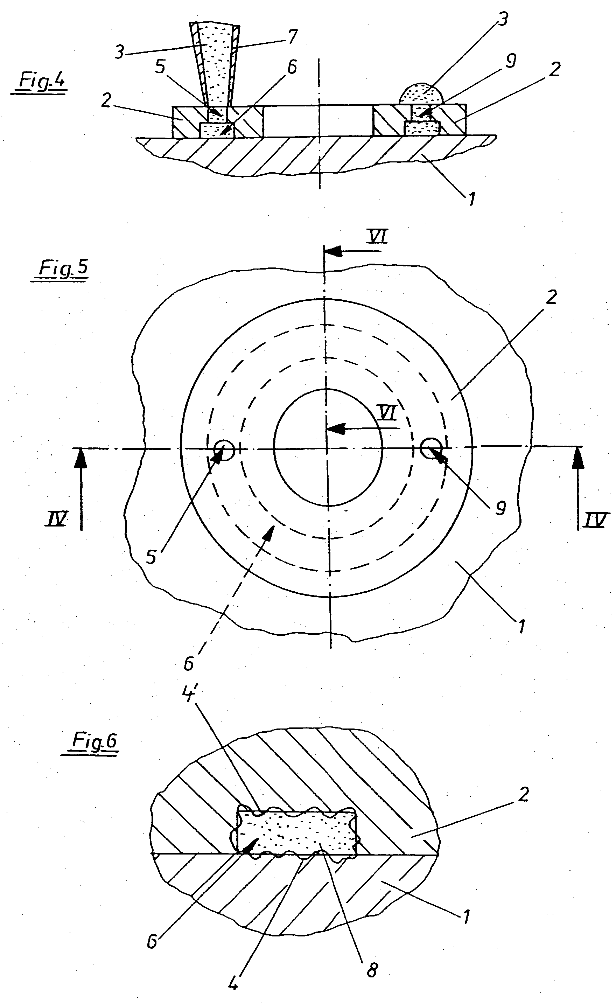

In den Fig. 4 bis 6 ist das an das Bauelement 1 angelegte Bauteil 2 ringförmig ausgebildet. Auch in diesem Bauteil 2 ist eine Hohlkammer 6 als Aufnahmeraum angeordnet, die in Richtung der im Verbindungsbereich liegenden Fläche des Bauelements 1 offensteht. Die Hohlkammer 6 folgt der Ausbildung des Bauteils 2 und ist gleichfalls ringförmig ausgebildet. Sie ist über zwei Öffnungen 5 und 9 mit der Umgebung verbunden und weist einen rechteckigen Querschnitt auf, wie aus Fig. 6 ersichtlich. Bei dieser Ausführungsmöglichkeit wird insofern von der Ausführungsmöglichkeit nach den Fig. 1 bis 3 abgewichen, als daß zwischen einem in der Hohlkammer 6 ausgehärteten Zwischenhalter 8 und dem Bauteil 2 keine formschlüssige Verbindung sondern eine kraftschlüssige Verbindung hergestellt wird. Dazu werden vor dem Einfüllen der Vergußmasse 3 in die Hohlkammer 6 die Wandungen des Aufnahmeraums 6 des Bauteils 2 mit einem Kleber 4' beauftragt. Das Einbringen der Vergußmasse 3 in die Hohlkammer 6 erfolgt dann wieder mit einer Einfülldüse 7, wie in Fig. 4 dargestellt. Die Einfülldüse 7 wird an die Öffnung 5 des Bauteils 2 angesetzt und anschließend wird die Vergußmasse 3 durch die Öffnung 5 eingebracht. Das Einbringen der Vergußmasse 3 wird so lange fortgesetzt, bis die zuvor in der Hohlkammer 6 enthaltene Luft über die Öffnung 9, die somit als Entlüftungsöffnung fungiert, vollständig ausgetreten ist. Der vollständige Austritt der Luft aus der Öffnung 9 ist dann erfolgt, wenn die Vergußmasse 3 über die Öffnung 9 aus dem Hohlraum 6 auszutreten beginnt, wie in Fig. 4 dargestellt. Die in den Aufnahmeraum 6 eingebrachte Vergußmasse 3 wird in die Kleber 4,4' am Bauelement 1 und am Bauteil 2 gesetzt. Nach Aushärten der Vergußmasse 3 zu dem Zwischenhalter 8 und dem Abbinden der Kleber 4,4' sind das Bauteil 2 und das Bauelement 1 über den Zwischenhalter 8 kraftschlüssig miteinander verbunden.

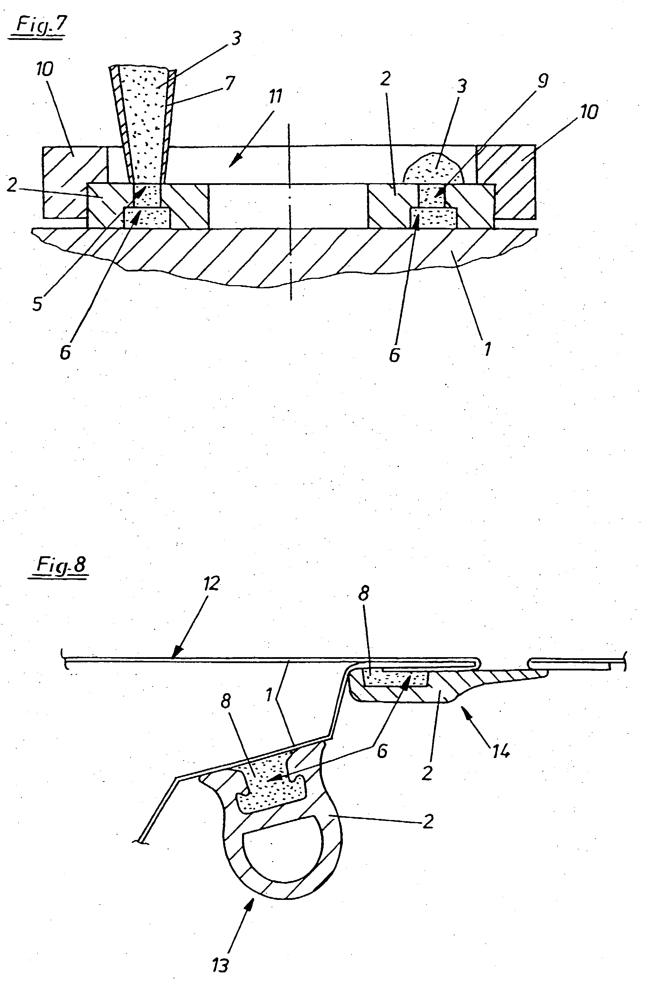

Fig. 7 zeigt, daß während des Einbringens der Vergußmasse 3 in die Hohlkammer 6 des Bauteils 2 eine Halteeinrichtung 10 verwendet wird, mit welcher die Anlage des Bauteils 2 an das Bauelement 1 während des Einfüllens der Vergußmasse 3 fixiert wird. Die Halteeinrichtung 10 ist schematisch dargestellt, sie ist im wesentlichen rahmenförmig ausgebildet, in der Weise, daß sie das Bauteil 2 formschlüssig umgreift und lagefest gegen das Bauelement 1 führt. Damit die Einfülldüse 7 an die Öffnung 5 des Bauteils 2 herangeführt werden kann, ist in der Halteeinrichtung 10 gleichfalls eine Öffnung 11 für ein Durchführen der Einfülldüse 7 vorgesehen.

An dem in Fig. 8 dargestellten Abschnitt der Kraftfahrzeugkarosserie, bei dem es sich um einen Abschnitt einer Kraftfahrzeugtür 12 handelt, sind zwei umlaufende Türdichtungen befestigt, die mittels des erfindungsgemäßen Verbindungsverfahrens mit der Kraftfahrzeugtür 12 verbunden wurden. Die Dichtung 13 weist eine Hohlkammer 6 mit einem pilzförmigen Querschnitt auf. Diese Hohlkammer 6 als Aufnahmeraum ist durch einen nach dem erfindungsgemäßen Verfahren hergestellten Zwischenhalter 8 ausgefüllt, wobei der Zwischenhalter 8 die Dichtung 13 als Bauteil abschnittsweise formschlüssig hintergreift. Der Zwischenhalter 8 ist mit dem Bauteil 1, hier der Kraftfahrzeugtür 12, kraftschlüssig verbunden. Bei der Dichtung 14, die als Kraftfahrzeugtürfugendichtung ausgebildet ist, ist der Zwischenhalter 8 mit dem Bauteil 2, der Dichtung 14, kraftschlüssig verbunden. Der Zwischenhalter 8 ist zudem mit der Kraftfahrzeugtür 12 kraftschlüssig verbunden.

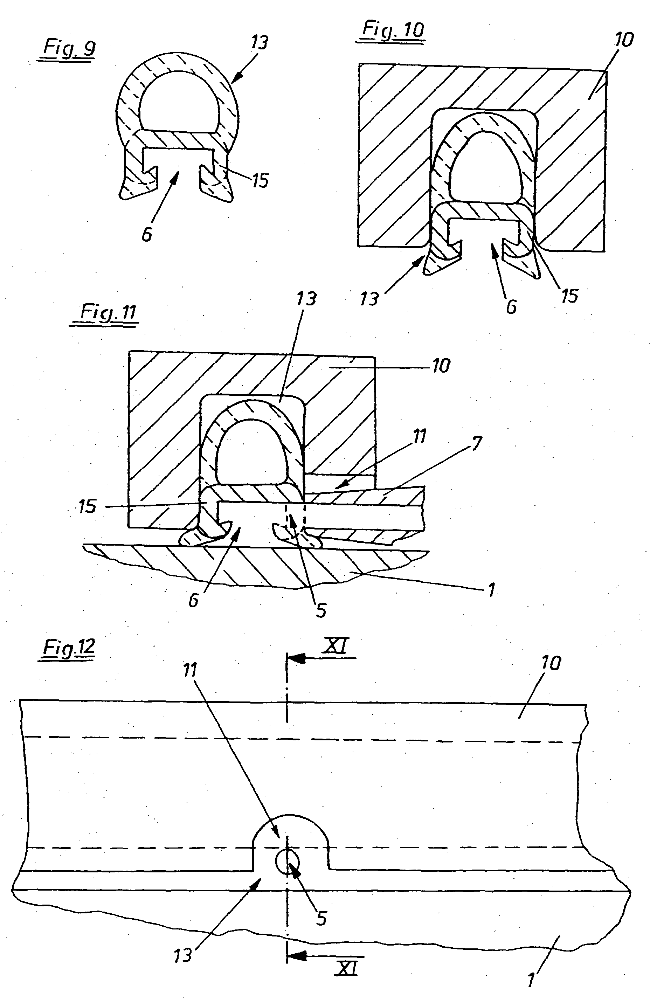

Die in Fig. 9 im Querschnitt dargestellte Dichtung 13 besteht aus zwei Materialabschnitten unterschiedlicher Härte. Im Bereich der Hohlkammer 6 für die Vergußmasse 3 bzw. für den ausgehärteten Zwischenhalter 8 besteht die Dichtung 13 aus einem U-förmigen Profil 15, das aus einem harten Material gefertigt ist. Dieses harte Material ist dazu geeignet, mit dem ausgehärteten Zwischenhalter 8 eine mechanisch feste formschlüssige Halteverbindung einzugehen. Die übrigen Bereiche der Dichtung 13 sind aus einem weichen Material ausgebildet, welches sich eng an beispielsweise Karosserieabschnitte eines Kraftfahrzeuges anlegen kann und somit eine Dichtung bewirkt.

Die Fig. 10 und 11 zeigen, wie die Dichtung 13 nach dem erfindungsgemäßen Verfahren mit z. B. einer Kraftfahrzeugkarosserie als Bauelement 1 verbunden wird. Die Dichtung 13 wird dazu an eine im Verbindungsbereich befindliche Fläche des Bauelements 1 angelegt, in der Weise, daß die innerhalb der Dichtung 13 angeordnete Hohlkammer 6 in Richtung des Bauelements 1 offensteht. Zum Fixieren dieser Anlage der Dichtung 13 an das Bauelement 1 wird wieder eine Halteeinrichtung 10 verwendet, welche die Dichtung 13 übergreift und dabei ausrichtet und hält. In einem Abschnitt der Dichtung 13 ist auf Höhe des Profils 15 eine Öffnung 5 angeordnet, durch welche das Einbringen von Vergußmasse 3 in die Hohlkammer 6 möglich ist. Zur Öffnung 5 weist die Halteeinrichtung eine korrespondierende Öffnung 11 auf, durch welche, wie in Fig. 11 dargestellt, die Einfülldüse 7 einer Einfülleinrichtung hindurchgeführt werden kann, bis sie an der Öffnung 5 der Dichtung 13 anliegt.

Fig. 12 zeigt in einer Seitenansicht die korrespondierenden Lagen der Öffnungen 5 des Profils 15 und der Öffnung 11 der Halteeinrichtung 10. Durch die Einfülldüse 7 kann danach Vergußmasse 3 in die Hohlkammer 6 eingebracht werden, bis die Hohlkammer 6 vollständig mit der Vergußmasse 3 gefüllt ist und sich die Vergußmasse 3 an die Flächen von Bauelement 1 und Dichtung 13 anlegt. Das Bauelement 1 und die Dichtung 13 wurden dabei zuvor nicht mit einem Kleber beauftragt, der bei Verwendung einer sowohl am Bauelement 1 als auch an der Dichtung 13 anhaftenden Vergußmasse 3 nicht benötigt wird. Die an der Ausbildung der Hohlkammer 6 beteiligten Flächen der Dichtung 13 können auch mit einem Trennmittel beauftragt sein, welches bewirkt, daß sich eine haftende Vergußmasse 3 nur mit dem Bauelement 1 kraftschlüssig verbindet und zwischen der Vergußmasse 3 und der Dichtung 13 eine formschlüssige Verbindung hergestellt ist.

Bei dem erfindungsgemäßen Verfahren wird die Herstellung einer Verbindung eines Bauteils 2 mit einem Bauelement 1 wesentlich vereinfacht. Die Vereinfachung erfolgt insbesondere dadurch, daß durch das Bauteil 2 und das Bauelement 1 eine Form für eine den Zwischenhalter 8 ausbildende Vergußmasse 3 vollständig ausgebildet wird. Weitere Formteile werden vorteilhaft nicht benötigt. Die Verbindung eines Bauteils 2, beispielsweise einer Dichtung 13, kann in wenigen Arbeitsschritten einfach so erfolgen, daß das Bauteil 2 an das Bauelement 1 angelegt wird und durch den Aufnahmeraum Vergußmasse 3 eingebracht, z. B. eingespritzt wird. Dieses Einspritzen kann sehr schnell erfolgen, so daß in kurzer Zeit der gesamte Aufnahmeraum durch die Vergußmasse 3 gefüllt ist. Nach Aushärten der Vergußmasse 3 ist eine verwendete Halteeinrichtung 10 wieder entfernbar und das Bauteil 2 mit dem Bauelement 1 fest verbunden. Auf vorteilhafte Weise ist zudem der die Teile miteinander verbindende Zwischenhalter 8 nicht sichtbar, da er innerhalb des Aufnahmeraumes vollständig von Bauelement 1 und Bauteil 2 umgeben ist. Auch eingesetzte Kleber 4,4' sind vorteilhaft nicht sichtbar.

## Patentansprüche

1. Verfahren zum Herstellen einer Verbindung eines Bauteils mit einem Bauelement,
**dadurch gekennzeichnet**,
daß das Bauteil (2) an eine im Verbindungsbereich befindliche Fläche des Bauelements (1) angelegt wird und daß mittels zwischen Bauteil (2) und Bauelement (1) eingebrachter, am Bauelement (1) anhaftender und aushärtender Vergußmasse (3) wenigstens ein Zwischenhalter (8) ausgebildet wird, der mit dem Bauteil (2) in haltende Wirkverbindung bringbar ist.

2. Verfahren nach Anspruch 1, dadurch gekennzeichnet, daß auf die im Verbindungsbereich befindlichen Flächen des Bauelements (1) und/oder des Bauteils (2) ein Kleber (4,4') aufgetragen wird und daß die Vergußmasse (3) in den Kleberauftrag gesetzt wird.

3. Verfahren nach Anspruch 1 oder 2, dadurch gekennzeichnet, daß das Bauteil (2) bei der Ausbildung des Zwischenhalters (8) aus Vergußmasse (3) an einer Formgebung der Vergußmasse (3) beteiligt wird.

4. Verfahren nach Anspruch 3, dadurch gekennzeichnet, daß die an der Ausbildung des Zwischenhalters (8) aus Vergußmasse (3) beteiligten Flächen des Bauteils (2) bei auftretender Adhäsionsneigung der für Bauteil (2) und Vergußmasse (3) verwendeten Werkstoffe vor Anlage der Vergußmasse (3) mit einem Trennmittel beschichtet werden.

5. Verfahren nach einem der Ansprüche 1 bis 4, dadurch gekennzeichnet, daß der Zwischenhalter (8) aus einer Vergußmasse (3) gegossen wird.

6. Verfahren nach einem der vorhergehenden Ansprüche, dadurch gekennzeichnet, daß durch das Bauteil (2) und das Bauelement (1) ein Aufnahmeraum für die Vergußmasse (3) während des Ausbildens des Zwischenhalters (8) ausgebildet wird und daß die Vergußmasse (3) in den Aufnahmeraum eingefüllt wird.

7. Verfahren nach Anspruch 6, dadurch gekennzeichnet, daß der Aufnahmeraum im wesentlichen durch eine in das Bauteil (2) eingelassene Rille, Vertiefung oder dergleichen Hohlkammer (6) ausgebildet wird, welche bei Anlage des Bauteils (2) an das Bauelement (1) in Richtung der im Verbindungsbereich befindlichen Fläche des Bauelements (1) offensteht.

8. Verfahren nach Anspruch 6 oder 7, dadurch gekennzeichnet, daß zum Einfüllen der Vergußmasse (3) eine Einfülleinrichtung mit einer Einfülldüse (7) verwendet wird, wobei die Vergußmasse (3) durch die Einfülldüse (7) über wenigstens eine Öffnung (5) des Bauteils (2) in den Aufnahmeraum eingebracht wird.

9. Verfahren nach Anspruch 8, dadurch gekennzeichnet, daß das Bauteil (2) während des Ansetzens an das Bauelement (1) durch eine Halteeinrichtung (10) gehalten wird und daß die Halteeinrichtung (10) mit wenigstens einer mit einer Öffnung (5) des Bauteils (2) für die Einfülldüse (7) korrespondierenden Õffnung (11) für ein Durchführen der Einfülldüse (7) versehen wird.

10. Verfahren nach einem der Ansprüche 1 bis 9, dadurch gekennzeichnet, daß für eine haltende Verbindung zwischen dem Bauteil (2) und dem ausgehärteten Zwischenhalter (8) Formschluß bewirkende korrespondierende Gestaltungen verwendet werden.

11. Verfahren nach einem der vorhergehenden Ansprüche, dadurch gekennzeichnet, daß als Material für das Bauteil (2) EPDM verwendet wird und daß als Material für die Vergußmasse (3) Polyurethan verwendet wird.
